**Europäisches Patentamt**

**European Patent Office**

**Office européen des brevets**

(11) Veröffentlichungsnummer: **0 043 892**
**B1**

(12) # EUROPÄISCHE PATENTSCHRIFT

(45) Veröffentlichungstag der Patentschrift:
**11.07.84**

(51) Int. Cl.³: **G 01 N 11/14**

(21) Anmeldenummer: **81102835.6**

(22) Anmeldetag: **14.04.81**

(54) Rotationsrheometer sowie Verfahren zur Bestimmung der Normalkraft einer zwischen zwei Messflächen gescherten Messubstanz.

(30) Priorität: **10.07.80 CH 5288/80**

(43) Veröffentlichungstag der Anmeldung:
**20.01.82 Patentblatt 82/3**

(45) Bekanntmachung des Hinweises auf die Patenterteilung:
**11.07.84 Patentblatt 84/28**

(84) Benannte Vertragsstaaten:
**CH DE FR GB LI**

(56) Entgegenhaltungen:
**DE - A - 2 149 720**
**DE - B - 2 733 099**
**GB - A - 1 365 677**
**US - A - 2 752 778**
**US - A - 3 807 221**

**INDUSTRIAL LABORATORY, Band 41, Nr. 6, June 1975,
Seiten 901-902 New York, U.S.A. D.G. BORISOV et al.:
"An attachment to a rotational viscometer for measuring
the normal stresses in polymer melts"**

**Die Akte enthält technische Angaben, die nach dem
Eingang der Anmeldung eingereicht wurden und die
nicht in dieser Patentschrift enthalten sind.**

(73) Patentinhaber: **CONTRAVES AG,
Schaffhauserstrasse 580, CH-8052 Zürich (CH)**

(72) Erfinder: **Diebold, Doushan, Niederglattstrasse 19,
CH-8155 Niederhasli (CH)**

## Beschreibung

Die Erfindung betrifft ein Rotationsrheometer nach dem Kegel-Platte-Prinzip mit einer Einrichtung zum Messen der Normalkraft einer zwischen zwei Messflächen gescherten Messsubstanz. Die Erfindung betrifft ausserdem ein Verfahren zur Messung der Normalkraft in einer in einem Rotationsrheometer nach dem Kegel-Platte-Prinzip zwischen zwei Messflächen gescherten Messsubstanz. Messkegel und Messplatte sind übereinander angeordnet und schliessen zwischen ihren Messflächen die Messsubstanz ein. Bei einer entgegengesetzten Bewegung der beiden Messflächen wird die Messsubstanz geschert. Dabei entstehen bei einer viskoelastischen Messsubstanz neben den Tangential- auch Normalkräfte, welche die beiden Messflächen in axialer Richtung auseinanderdrücken. Diese Normalkräfte werden als Gesamtkraft auf den Kegel oder die Platte bestimmt.

Durch die DE-B Nr. 2733099 ist ein Rotationsviskosimeter nach dem Platte-Kegel- oder Platte-Platte-Prinzip bekannt, bei dem die Kraftübertragung zwischen der unteren Messfläche und der Einrichtung zum Messen der Normalkraft durch ein gegenüber axialen Kräften sehr steifes, in anderer Richtung aber frei bewegliches Zwischenglied erfolgt. Die Messeinrichtung besteht im wesentlichen aus einem Stab, der die nach unten wirkende Normalkraft von der unteren Messfläche auf einen aus Stahl ausgebildeten Biegebalken mit aufgeklebtem Dehnungsmessstreifen überträgt.

Dieses wegarme Kraftmesssystem erfordert für exakte Messungen einen extrem starren mechanischen Aufbau, welcher mit hohen Herstellungskosten und einem grossen Gerätegewicht verbunden ist.

Auch aus dem Artikel von Borisov u.a. in „Industrial Laboratory" 41/6 (1975, New York), 901-902 ist ein Rotationsrheometer der eingangs genannten Art bekannt. Darin sind beide Messflächen axial beweglich: während aber der Kegel in axialer Richtung frei beweglich ist, wird die Platte durch ein Regelungssystem in axialer Richtung bis auf einen sehr kleinen Positionierungsfehler in konstanter Position festgehalten. Das Regelungssystem enthält einen Messwertgeber, der die Verstellung der Platte in axialer Richtung in ein Signal wandelt, von dem ein Motor gesteuert wird: dieser Motor spannt über einen Seilzug eine Feder, deren Spannverformung auf eine mit der Platte verbundene Wippe eine Kraft ausübt, derart, dass die Platte durch diese Kraft in ihre Ausgangsposition (bis auf den sehr kleinen Positionierungsfehler) zurückgebracht wird. Vernachlässigt man den Positionierungsfehler, so ist die Spannverformung der Feder ein Mass der auf die Platte ausgeübten axialen Kraft. Zum Ausgleich des Gewichts der Platte, der Wippe und der damit verbundenen Teile ist eine Justierfeder vorgesehen. Ein Nachteil dieser Vorrichtung ist, dass ein ausserordentlich heikles Justieren vorgenommen werden muss, um bei der hohen Verstärkung im Regelungssystem einen Nullwert der Verstellung (Signal Null am Messwertgeber) zu erhalten, wenn im Rotationsrheometer keine Normalkraft auftritt (keine Substanz zwischen Kegel und Platte): ein solcher Nachteil ist typisch für alle Messvorrichtungen mit extrem wegarmem Kraftmesssystem.

Es ist Aufgabe der Erfindung, ein kostengünstig herstellbares Rotationsrheometer mit nicht extrem starrem Aufbau und einem nicht extrem wegarmen Kraftmesssystem zu entwickeln, mit dem die Normalkraft einer gescherten Messsubstanz exakt gemessen werden kann.

Eine weitere Aufgabe der Erfindung ist die Entwicklung eines Verfahrens zur einfachen und exakten Messung der Normalkraft, wobei der Messvorgang im wesentlichen durch einen Rechner gesteuert und ausgewertet wird.

In einem Rotationsrheometer der eingangs genannten Art wird die Aufgabe gelöst durch die im Anspruch 1 angegebene Kombination von Merkmalen.

Zur Messung der Normalkraft in einer in einem Rotationsrheometer nach dem Kegel-Platte-Prinzip zwischen zwei Messflächen gescherten Substanz wird die Aufgabe gelöst durch die im Anspruch 3 angegebenen Verfahrensschritte.

Das erfindungsgemässe Rotationsrheometer hat den Vorteil, dass eine aufklappbare Konstruktion möglich ist, welche eine einfache Reinigung und Präparation sowie eine Kontrolle des Messvorgangs erlaubt. Weitere Vorteile ergeben sich aus den Unteransprüchen.

Die Erfindung wird nun anhand der Zeichnung näher erläutert.

Es zeigen:

Fig. 1 eine Seitenansicht, teilweise im Schnitt, eines erfindungsgemässen Rotationsrheometers;

Fig. 2 ein Weg-Kraft-Diagramm.

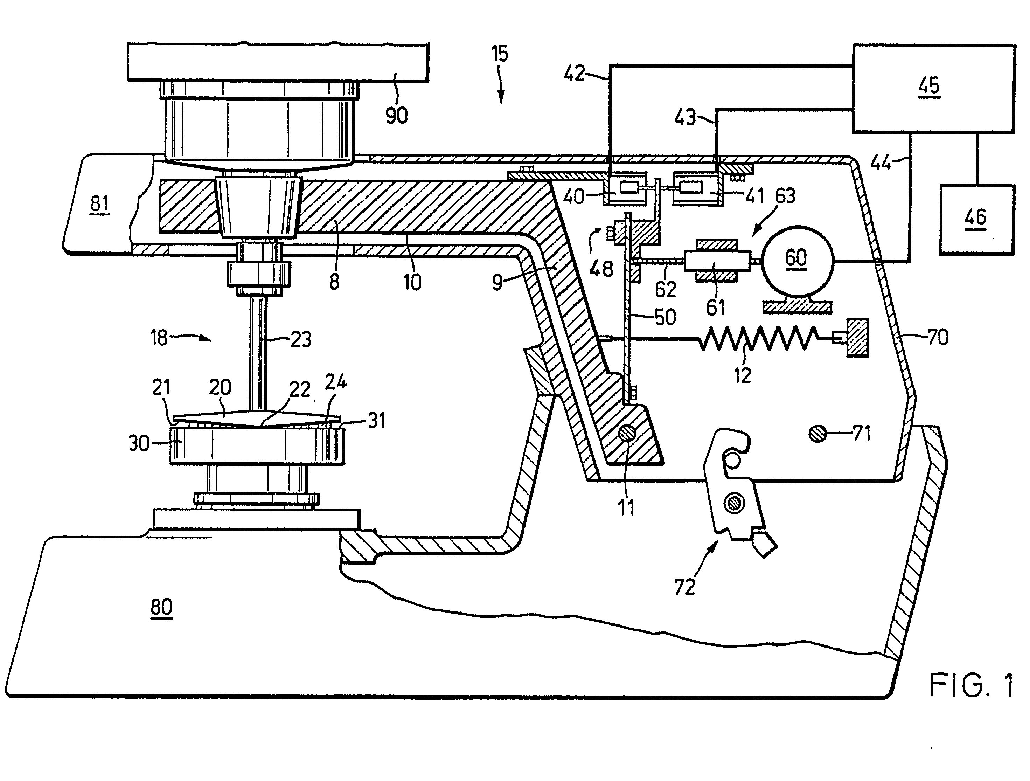

Das in der Fig. 1 dargestellte Rotationsrheometer 15 besteht im wesentlichen aus zwei um eine Achse 71 schwenkbaren Teilen: dem Gerätefuss 80 und dem Gerätearm 81 sowie einem Rechner 45 und einer Anzeigevorrichtung 46. Auf dem Gerätefuss 80 ist eine Messplatte 30 mit der Messfläche 31 angeordnet. In der Messplatte 30 sind (in der Zeichnung nicht dargestellt, weil nicht zur Erfindung gehörend) eine Heizeinrichtung sowie ein Temperaturfühler eingebaut. Der Gerätearm 81 kann vor und nach einer Messung durch eine Arretiervorrichtung 72 festgelegt werden. Im Gehäuse 70 des Gerätearms 81 befindet sich eine um die Achse 11 schwenkbar gelagerte Wippe 10, welche vorzugsweise gewinkelt ist, und aus einem im wesentlichen waagrechten Arm 8 und einem im wesentlichen senkrechten Arm 9 besteht.

Am waagrechten Arm 8 ist eine Antriebs- und Drehmomentenmesseinrichtung 90 sowie ein Messteil 18, bestehend aus der Welle 23 und dem Messkegel 20, angeordnet. Das Gewicht an der Wippe 10 wird durch eine Ausgleichsfeder 12 nahezu kompensiert, welche am Gehäuse 70 und an der Wippe 10 angreift. Anstelle der Feder kann auch ein Ausgleichsgewicht an der Wippe fixiert werden.

Am senkrechten Arm 9 ist eine Kraftmessvorrichtung 48, bestehend aus einer Blattfeder 50 und einem Messwertgeber 40, angeordnet. Anstelle einer Blattfeder kann aber auch eine Spiralfeder eingebaut werden. Die Spannkraft des Federelements 50 ist durch eine Positioniervorrichtung 63 verstellbar. Die Positioniervorrichtung 63 besteht aus einem Motor 60, einer Spindel 62 sowie einem Spindellager 61. Durch den Motor 60 kann die Spindel 62 in axialer Richtung bewegt werden. Der Druck der Spindel 62 auf das Federelement 50 wird auf die Wippe 10 und schliesslich auf den Messkegel 20 übertragen. Der Verstellweg der Spindel 62 wird durch einen am Gehäuse 70 angeordneten Messwertgeber 41 gemessen, während die Kraft des Federelements 50 auf die Wippe 10 durch einen mit der Wippe 10 verbundenen Messwertgeber 40 gemessen wird. Der Verstellweg der Spindel 62 als auch die Kraft der Spindel auf das Federelement kann aber auch unmittelbar an der Spindel 62 oder am Motor 60 gemessen werden.

Die Positioniervorrichtung 63 und die Kraftmessvorrichtung 48 können aber auch in einer im wesentlichen linearen Anordnung direkt auf die Welle 23 und den Messkegel 20 wirken.

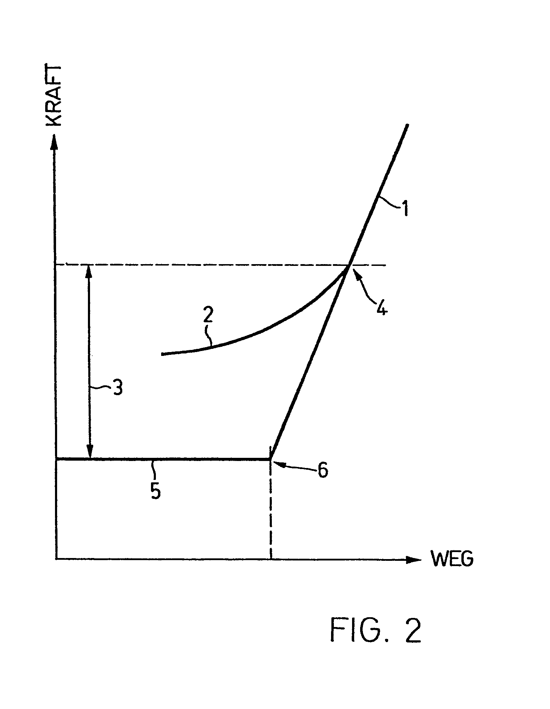

Anhand der Fig. 2 soll die Messmethodik zur Bestimmung der Normalkraft einer gescherten Messsubstanz erläutert werden. Das dargestellte Weg-Kraft-Diagramm zeigt auf der Abszisse den Weg der Spindel 62 in axialer Richtung und auf der Ordinate die Kraft, welche auf den Messkegel in axialer Richtung ausgeübt wird. Der Weg der Spindel 62 wird durch den Messwertgeber 41, und die Kraft auf den Messkegel 20 durch den Messwertgeber 40 bestimmt.

Befindet sich keine Messsubstanz zwischen den Messflächen, so bewegt sich der Messkegel 20 gegen den im wesentlichen konstanten Kraftüberschuss der Feder 12 relativ zur Messfläche 31, bis die Konusspitze 22 die Messfläche 31 berührt. Entsprechend erscheint auf dem Weg-Kraft-Diagramm eine nahezu horizontal verlaufende Gerade 5, die nach einem Knickpunkt 6 in eine steil ansteigende Gerade 1 übergeht. Der Knickpunkt 6 entsteht bei der Berührung der Kegelspitze 22 mit der Messfläche 31.

Befindet sich zwischen den Messflächen eine Messsubstanz, so wird diese auf den rotierenden Messkegel 20 eine in axialer Richtung wirkende Normalkraft ausgeübt. Auf dem Weg-Kraft-Diagramm erscheint die im allgemeinen nicht lineare Normalkraftkurve 2, welche nach einem Knickpunkt 4 im wesentlichen linear ansteigt. Der Knickpunkt 4 entsteht bei der Berührung der Kegelspitze 22 mit der Messfläche 31.

Die Normalkraft 3 der gescherten Messsubstanz 24 auf den Messkegel 20, unmittelbar bei der Berührung der Kegelspitze 22 mit der Messfläche 31, ist die Differenz der beiden Kräfte, welche beim Knickpunkt 4 und beim Knickpunkt 6 gemessen werden.

Um den Knickpunkt 4 exakt bestimmen zu können, wird die Normalkraftkurve 2 in seiner Umgebung mehrmals durchlaufen, und der entsprechende Kraftwert nach einem Interpolationsverfahren bestimmt. Vorteilhafterweise wird dazu ein Rechner 45 eingesetzt, welcher über Signalleitungen 42, 43, 44 mit den beiden Messwertgebern 40, 41 und dem Motor 60 verbunden ist, und mit welchem der Messvorgang gesteuert und die Messdaten ausgewertet werden. Die Messwerte werden, entsprechend den Anforderungen der Benützer, durch eine Anzeigevorrichtung in numerischer Form oder durch ein Schreibgerät in graphischer Darstellung angezeigt.

## Patentansprüche

1. Rotationsrheometer (15) nach dem Kegel-Platte-Prinzip mit einer Einrichtung zur Messung der Normalkraft in einer zwischen zwei Messflächen (21, 31) gescherten Messsubstanz (24), wobei eine erste der beiden Messflächen (31) gegenüber einem Gehäuse (70) zumindest in axialer Richtung der Messflächen arretierbar und die zweite Messfläche (21) relativ zum Gehäuse in axialer Richtung verstellbar ist, zur Verstellung der zweiten Messfläche (21) diese über ein Federelement (50) mit einer Positioniervorrichtung (63) verbunden ist, derart, dass das eine Ende des Federelements (50) zumindest in axialer Richtung der Messflächen kraftschlüssig mit der zweiten Messfläche (21), das eine Ende der Positioniervorrichtung (63) kraftschlüssig mit dem Gehäuse (70) und das jeweils andere Ende des Federelements (50) und der Positioniervorrichtung (63) kraftschlüssig miteinander verbunden sind, und wobei ein Messwertgeber (41) zur Messung des Verstellwegs zwischen den beiden Enden der Positioniervorrichtung (63) vorgesehen ist, dadurch gekennzeichnet, dass ein zweiter Messwertgeber (40) zur Messung der vom Federelement (50) auf die zweite Messfläche (21) ausgeübten Kraft und ein Rechner (45) zur laufenden Zuordnung der Messwerte aus den beiden Messwertgebern (40, 41) vorgesehen sind.

2. Rotationsrheometer nach Anspruch 1 mit einer ersten am Gehäuse (70) in ihrer axialen Richtung nicht verschiebbar angeordneten Messfläche (31) und einer am Gehäuse (70) um eine Schwenkachse (11) schwenkbar angelenkten Wippe (10), an der eine zweite Messfläche (21) in ihrer axialen Richtung nicht verschiebbar angeordnet ist, wobei das eine Ende des Federelements (50) kraftschlüssig mit der Wippe (10) verbunden ist, dadurch gekennzeichnet, dass die Wippe (10) gewinkelt und mit einem der zweiten Messfläche (21) zugewandten im wesentlichen waagrechten Arm (8) und einem der Schwenkachse (11) der Wippe (10) zugewandten zweiten Arm (9) ausgebildet ist, und dass die beiden Messwertgeber (40, 41) etwa in Verlängerung des waagrechten Arms (8) angeordnet sind.

3. Verfahren zur Messung der Normalkraft in einer in einem Rotationsrheometer nach dem Kegel-Platte-Prinzip zwischen zwei Messflächen gescherten Messsubstanz, dadurch gekennzeichnet, dass durch Verstellung eines die Messflächen aufeinander drückenden Federelements die anfangs voneinander beabstandeten Messflächen in einer ersten Phase einander genähert werden, bis sie sich berühren, und in einer anschliessenden zweiten Phase durch Verstellung des Federelements um einen Verstellweg von mindestens 5 µm die Messflächen aufeinandergedrückt werden, während beider Phasen eine zwischen den Messflächen wirkende Kraft und der Verstellweg gemessen werden, und die Werte der Kraft und des Verstellwegs unter gegenseitiger Zuordnung in einem Rechner gespeichert werden, in welchem der Verlauf der Kraft als Funktion des Verstellwegs analysiert und ein Knickpunkt dieser Funktion sowie der diesem Knickpunkt zugeordnete Wert der Kraft festgestellt werden, wobei der Messwert der Normalkraft sich aus der Differenz des festgestellten Werts der Kraft und eines Leerwerts der Kraft ergibt.

4. Verfahren nach Anspruch 3, dadurch gekennzeichnet, dass nach dem Durchlaufen der ersten und der zweiten Phase diese zumindest teilweise wiederholt werden, derart, dass der Bereich des Verstellwegs um den Knickpunkt herum mehrmals durchlaufen wird.

## Claims

1. Rotary rheometer (15) according to the cone-plate principle with a device for measuring the normal force in a measuring substance (24) sheared between two measuring surfaces (21, 31), wherein a first of the two measuring surfaces (31) can be fixed with respect to a housing (70) at least in the axial direction of the measuring surfaces, and the second measuring surface (21) is adjustable relatively to the housing in the axial direction, for the adjustment of the second measuring surface (21) it is connected by means of a spring element (50) to a positioning device (63) in such a way that one end of the spring element (50) is connected, at least in the axial direction of the measuring surfaces, in force-locking manner to the second measuring surface (21), one end of the positioning device (63) is connected in force-locking manner to the housing (70), and the respective other end of the spring element (50) and the positioning device (63) are connected to one another in force-locking manner, and wherein there is provided a measurement value sensor (41) for measuring the adjusting path between the two ends of the positioning device (63), characterised in that there are provided a second measurement value sensor (40) for measuring the force exerted by the spring element (50) on the second measuring surface (21), and a computer (45) for the continuous correlation of the measurement values from the two measurement value sensors (40, 41).

2. Rotary rheometer according to Claim 1, with a first measuring surface (31) arranged non-displaceably in its axial direction on the housing (70), and a rocker (10) rockably pivoted about a pivotal axis (11) on the housing (70), on which rocker there is disposed a second measuring surface (21) arranged non-displaceably in its axial direction, wherein the one end of the spring element (50) is connected in force-locking manner with the rocker (10), characterised in that the rocker is made to be angled and with a substantially horizontal arm (8) turned towards the second measuring surface (21) and a second arm (9) turned towards the pivotal axis (11) of the rocker (10), and in that the two measurement value sensors (40, 41) are arranged approximately in an extension of the horizontal arm (8).

3. Process for measuring the normal force in a measuring substance sheared in a rotary rheometer according to the cone-plate principle between two measuring surfaces, characterised in that, by adjustment of a spring element pressing the measuring surfaces against each other, the measuring surfaces which were initially distanced from one another are brought near to one another in a first phase until they touch and, in a subsequent second phase, are pressed against one another by adjustment of the spring element by an adjusting path of at least 5 µm; during both phases a force working between the measuring surfaces, and the adjusting path, are measured, and the values of the force and the adjusting path with mutual correlation are stored in a computer in which the development of the force is analysed as a function of the adjusting path, and a break point of this function and the value associated with this break point are determined, whereby the measurement value of the normal force can be seen from the difference of the value of the force determined and a no-load value of the force.

4. Process according to Claim 3, characterised in that, after the passage of the first and the second phase, these are repeated at least partially in such a way that the region of the adjusting path around the break point is traversed several times.

## Revendications

1. Rhéomètre rotatif (15) suivant le principe cône-plaque avec un dispositif pour la mesure de la force normale dans une substance (24) soumise à un cisaillement entre deux surfaces de mesure (21, 31), une première des deux surfaces de mesure (31) pouvant être arrêtée par rapport à un carter (70), au moins dans la direction axiale des surfaces de mesure, et la seconde surface de mesure (21) étant réglable par rapport au carter en direction axiale, la seconde surface de mesure (21) étant, pour son réglage, reliée à un dispositif de positionnement (63) par l'intermédiaire d'un élément à ressort (50), de sorte que l'une des extrémités de l'élément à ressort (50) soit reliée par force, au moins dans la direction axiale des surfaces de mesure, à la seconde surface de mesure (21), que l'une des extrémités du dispositif de positionnement (63) soit reliée par force au carter (70) et que l'autre extrémité de l'élément à ressort (50) et le dispositif de positionnement (63) soient reliés entre eux par force, un capteur de mesure (41) étant prévu pour mesurer la course de déplacement entre les deux extrémités du dispositif de positionnement, caractérisé en ce qu'il est prévu un second capteur de mesure (40) pour mesurer la force exercée par l'élément à ressort (50) sur la seconde surface de mesure (21) et un ordinateur (45) pour la mise en relation continue des valeurs de mesure provenant des deux capteurs de mesure (40, 41).

2. Rhéomètre rotatif selon la revendication 1 avec une première surface de mesure (31) disposée sur le carter (70) sans possibilité de déplacement dans sa direction axiale et une bascule (10) articulée sur le carter (70) pour pivoter autour d'un axe de pivotement (11), sur laquelle une seconde surface de mesure (21) est disposée sans possibilité de déplacement dans sa direction axiale, l'une des extrémités de l'élément à ressort (50) étant reliée par force à la bascule (10), caractérisé en ce que la bascule (10) est coudée et agencée avec un bras (8), sensiblement horizontal, dirigé vers la seconde surface de mesure (21) et avec un second bras (9) dirigé vers l'axe de pivotement (11) de la bascule (10), et en ce que les deux capteurs de mesure (40, 41) sont disposés sensiblement dans le prolongement du bras horizontal (8).

3. Procédé de mesure de la force normale, dans un rhéomètre rotatif suivant le principe cône-plaque, dans une substance soumise à un cisaillement entre deux surfaces de mesure, caractérisé en ce que, par déplacement d'un élément à ressort appliquant les surfaces de mesure l'une sur l'autre, les surfaces de mesure, initialement situées à distance l'une de l'autre, sont rapprochées l'une de l'autre dans une première phase, jusqu'à ce qu'elles viennent en contact et, dans une deuxième phase, les surfaces de mesure sont pressées l'une sur l'autre par déplacement de l'élément à ressort d'une course d'au moins 5 µm, une force qui agit entre les surfaces de mesure et la course de déplacement étant mesurées pendant les deux phases, les valeurs de la force et de la course de déplacement étant mises en relation mutuelle, en mémoire dans un ordinateur, dans lequel la variation de la force en fonction de la course de déplacement est analysée et un point d'inflexion de cette fonction ainsi que la valeur de la force associée à ce point d'inflexion sont déterminés, la valeur de mesure de la force normale résultant de la différence de la valeur de force déterminée et d'une valeur de la force à vide.

4. Procédé selon la revendication 3, caractérisé en ce que, après le parcours de la première et de la seconde phase, celles-ci sont répétées au moins en partie, de manière que le domaine de la course de déplacement autour du point d'inflexion soit parcouru plusieurs fois.

FIG. 1

0 043 892

FIG. 2